# EUROPÄISCHE PATENTSCHRIFT

(11) **EP 3 390 916 B1**
(45) Veröffentlichungstag und Bekanntmachung des Hinweises auf die Patenterteilung: **10.02.2021**
(21) Anmeldenummer: 16806152.1
(22) Anmeldetag: 07.12.2016
(51) Int. Cl.: F24C 15/00, F24C 7/08, H05B 6/12, H05B 6/64, A21B 3/04

(54) **VERFAHREN ZUM BETREIBEN EINES GEWERBLICHEN GARGERÄTS UND EIN SOLCHES GARGERÄT**
METHOD FOR OPERATING A COMMERCIAL COOKING DEVICE AND SUCH A COOKING DEVICE
PROCÉDÉ PERMETTANT DE FAIRE FONCTIONNER UN APPAREIL DE CUISSON INDUSTRIEL ET APPAREIL DE CUISSON

(30) Priorität: 17.12.2015 DE 102015225581
(43) Veröffentlichungstag der Anmeldung: 24.10.2018
(73) Patentinhaber: Convotherm Elektrogeräte GmbH, 82436 Eglfing (DE)
(72) Erfinder: WILD, Hannes, 82418 Riegsee (DE)
(74) Vertreter: Hoefer & Partner Patentanwälte mbB
(86) Internationale Anmeldenummer: PCT/EP2016/080048
(87) Internationale Veröffentlichungsnummer: WO 2017/102494

(56) Entgegenhaltungen:
- EP-A1- 0 833 108
- EP-A1- 2 466 211
- EP-A1- 2 741 013
- DE-A1- 2 921 995
- DE-A1- 10 236 961
- DE-A1- 10 328 069
- GB-A- 2 258 126
- KR-B1- 101 110 182

## Beschreibung

Die Erfindung betrifft ein Verfahren zum Betreiben eines gewerblichen Gargeräts gemäß Anspruch 1, sowie ein gewerbliches Gargerät gemäß dem Oberbegriff des Anspruches 7.

Ein derartiges gewerbliches Gargerät kann ein sogenannter Kombidämpfer, ein Backofen oder auch ein Mikrowellenofen sein, wie es aus der EP 2 466 211 A1 bekannt ist. Weitere Gargeräte sind aus der GB 2 258 126 A, der KR 101 110 182 B1, der DE 29 21 995 A1, der EP 2 466 211 A1, der EP 0 833 108 A1, der DE 103 28 069 A1 und der DE 102 36 961 A1bekannt.

Bekannte Gargeräte weisen üblicherweise zumindest eine, in der Regel jedoch eine Mehrzahl von elektrischen, elektronischen und/oder elektromechanischen Komponenten auf. Diese elektrischen Komponenten können Schaltkreisplatinen, elektrisches Relais und Schalter, Sensoren, Pumpen oder auch andere Komponenten sein, was vom jeweiligen Typ des Gargeräts abhängt. Im Üblichen sind derartige elektrische Komponenten in einem separaten Bereich oder Raum des Gargeräts entfernt zu anderen Komponenten angeordnet, die hauptsächlich mechanische Komponenten sind, wie beispielsweise Fluidrohre und Schläuche, Lüfterräder, Lüfterrad-Motoren und Fluidspeicher, sodass die elektrischen Komponenten vor Leckagen oder auf Fehlfunktionen von mechanischen Komponenten geschützt sind, die die elektrischen Komponenten beschädigen könnten oder die zu Kurzschlüssen, elektrischen Fehlfunktionen oder Feuer führen können.

Bei bekannten Gargeräten gibt es in der Regel ein einzelnes Hauptkühlgebläse, das entweder ständig betrieben wird oder ein- und ausgeschaltet werden kann, um intermittierend zu laufen, wenn gewisse Temperaturen erreicht sind, die zum Beispiel auf einer Steuerplatine oder innerhalb des Bereiches oder des Aufnahmeraumes der elektrischen Komponenten gemessen werden können. Üblicherweise befindet sich das Hauptkühlgebläse in der Nähe von kritischen Komponenten, wie zum Beispiel einer Schaltkreisplatine und/oder einem Userinterface, um dieses Bauteil optimal zu kühlen und vor einem Ausfall, der einen Totalausfall des Gerätes verursachen würde, zu schützen.

Durch das Aktivieren des Hauptkühlgebläses bewegt sich kühle Luft vom Außenbereich des Gargeräts durch den inneren ersten Bereich des Gargerätes, wohingegen es sich nur teilweise durch den Aufnahmeraum für die elektrischen und mechanischen Komponenten bewegt, was am Aufbau des Innenbereichs des Gargeräts liegt, um kritische Komponenten von anderen Komponenten abschirmen zu können. Die bewegte Kühlluft erwärmt sich vom Zeitpunkt des Eintritts bis zum Auslass merklich, was dazu führt, dass die Kühlwirkung nachlässt. Daher ist die Aktivierung des Hauptkühlgebläses zur Kühlung des Bereiches oder des Aufnahmeraums der elektrischen Komponenten bei bekannten Gargeräten oft ineffizient und ineffektiv. Wenn zum Beispiel das Hauptkühlgebläse aktiviert wird, ist es üblicherweise erforderlich, mehr Kühlluft als eigentlich nötig zu fördern, um die alle elektrischen Komponenten bzw. den Aufnahmeraum für die elektrischen Komponenten zu kühlen, was an der Art der Luftbewegung durch den Innenbereich des Gargerätes liegt. Zusätzlich muss die Hauptkühlgebläseleistung so ausgelegt werden, dass alle Komponenten innerhalb des Komponentenbereichs bzw. Aufnahmeraums, unabhängig von ihrer Aktivierung und Anordnung, ausreichend gekühlt werden können. Dies kann eine Kühlung der Komponenten in der Nähe des Kühllufteintrittspunktes ergeben, die optimal umströmt sind, die höher als nötig ist, wobei überdies auch der Garraum gekühlt wird, was unerwünscht ist. Des Weiteren kann es bei bekannten Gargeräten dazu kommen, dass das Hauptkühlgebläse Komponenten kühlt, die überhaupt nicht aktiviert sind. Nicht aktivierte Komponenten erzeugen jedoch keine eigene Wärme, die kompensiert werden müsste, und darüber hinaus ist bei einer Nichtaktivierung auch eine hohe Außentemperatur für eine derartige nichtaktivierte Komponente unkritisch. Insgesamt ergibt sich dadurch ein hoher Energieverbrauch, vor allem, da der Wärmeverlust im Garraum durch die Aktivierung einer Heizeinrichtung kompensiert werden muss.

Darüber hinaus werden auch die elektrischen Komponenten bzw. der Aufnahmeraum für die elektrische Komponente ineffizient gekühlt, da die Aktivierung des Hauptkühlgebläses indirekt durch den Temperaturanstieg aufgrund von Wärmeleitung aufgrund der spezifischen Temperatur innerhalb des Garraumes bewirkt wird. Der Aufnahmeraum für die elektrischen Komponenten wird darüber hinaus ineffizient gekühlt, da die Anzahl von Sensoren, die die Aktivierung des Hauptkühlgebläses verursachen, häufig auf einen Sensor limitiert ist und/oder der Sensor bzw. die Sensoren nicht optimal für eine genaue Temperaturerfassung angeordnet sind.

Es ist daher Aufgabe der vorliegenden Erfindung, ein Verfahren zum Kühlen eines gewerblichen Gargeräts zu schaffen, mit dem auf kosten effektive Art und Weise eine effiziente Kühlung von zu kühlenden Komponenten, insbesondere von zu kühlenden elektrischen Komponenten, möglich ist.

Die Lösung dieser Aufgabe erfolgt durch die Merkmale des Anspruchs 1.

Erfindungsgemäß ist das Gargerät mit einem Hauptkühlgebläse und zumindest einem Hilfskühlgebläse versehen.

Bei dem erfindungsgemäßen Verfahren, bei dem ein Gargerät betrieben wird, das neben einem Hauptkühlgebläse auch ein Hilfskühlgebläse aufweist, ist es möglich, entweder nur das Hauptkühlgebläse oder nur das Hilfskühlgebläse oder beide Gebläse gleichzeitig mit gleicher oder unterschiedlicher Drehzahl zu betreiben, je nachdem, welcher Betriebsmodus ermittelt wird und wie die Temperaturverhältnisse im Gargerät sind.

Die Unteransprüche 2 bis 6 haben vorteilhafte Weiterbildungen des erfindungsgemäßen Verfahrens nach Anspruch 1 zum Inhalt.

Bei der Ausführungsform gemäß Anspruch 2 wird als Heizeinrichtung ein Brenner, insbesondere ein Gasbrenner, verwendet. Ein derartiger Brenner saugt eine beträchtliche Menge an Frischluft an, die durch das Gehäuse des Gargerätes hindurch geleitet wird. Diesen Umstand macht sich die vorteilhafte Weiterbildung gemäß Anspruch 2 zu Nutze, da das Hauptkühlgebläse nicht aktiviert bzw. ausgeschaltet werden kann, falls ermittelt wird, dass eine zweite Grenztemperatur nicht überschritten ist und der Brenner aktiviert ist, da dann die vom Brenner angesaugte Frischluftmenge zu Kühlzwecken mit herangezogen werden kann. Denn wenn ermittelt wird, dass eine zweite Grenztemperatur nicht überschritten ist, bedeutet dies, dass der Brenner eine genügend große Frischluftmenge ansaugt, sodass die Kühlung so hoch ist, dass die zweite Grenztemperatur nicht überschritten ist und somit das Hauptkühlgebläse nicht oder nicht vollständig aktiviert werden muss.

Es ist ferner Aufgabe der vorliegenden Erfindung, ein gewerbliches Gargerät gemäß dem Oberbegriff des Anspruches 7 zu schaffen, das kostengünstig und auf technisch effiziente Weise, insbesondere hinsichtlich seiner elektrischen Komponenten, gekühlt werden kann.

Die Lösung dieser Aufgabe erfolgt durch die Merkmale des Anspruches 7.

Die Unteransprüche 8 und 9 haben vorteilhafte Weiterbildungen des erfindungsgemäßen Gargeräts zum Inhalt.

Weitere Einzelheiten, Merkmale und Vorteile der Erfindung ergeben sich aus nachfolgender Beschreibung von Ausführungsbeispielen anhand der Zeichnung. Darin zeigt:
- Fig. 1: eine schematisch stark vereinfachte Darstellung einer Ausführungsform eines nicht zur Erfindung gehörenden Gargeräts,
- Fig. 2: eine der Fig. 1 entsprechende Darstellung einer ersten Ausführungsform,
- Fig. 3: eine der Fig. 1 und 2 entsprechende Darstellung einer zweiten Ausführungsform des erfindungsgemäßen Gargeräts,
- Fig. 4: eine teilgeschnittene Frontansicht der Ausführungsform des erfindungsgemäßen Gargeräts gemäß Fig. 3,
- Fig. 5: eine der Fig. 1 entsprechende Darstellung einer dritten Ausführungsform des erfindungsgemäßen Gargeräts, und Fig. 6 ein Ablaufdiagramm zur Erläuterung einer Ausführungsform des erfindungsgemäßen Verfahrens.

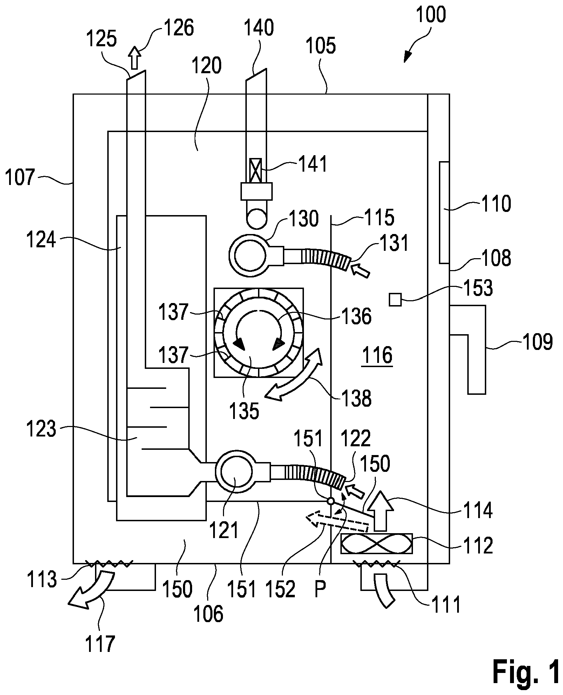

Fig. 1 zeigt eine schematisch stark vereinfachte Darstellung einer Ausführungsform eines Gargeräts 100, das insbesondere ein gewerbliches Gargerät sein kann. Das Gargerät 100 weist eine Deckenwand 105, eine Bodenwand 106, eine Rückwand 107 und eine Vorderwand 108 auf. Die Vorderwand 108 weist eine in Fig. 1 nicht dargestellte Tür auf, die einen Handgriff 109 umfasst, um einen in Fig. 1 ebenfalls nicht dargestellten Garraum öffnen und schließen zu können. Die Vorderwand 108 weist üblicherweise ein User- Interface 110 auf, das eine wählbare Anzahl von Funktionen umfasst, wie beispielsweise eine Anzeigeeinrichtung (Display), die zum Beispiel Informationen über das Garprodukt, Garbedingungen (wie beispielsweise Temperatur) im Garraum und Restgarzeiten von im Betrieb befindlichen Kochprogrammen anzeigt. Die Deckenwand 105, die Bodenwand 106, die Rückwand 107 und die Vorderwand 108 bilden ein Gehäuse und umgeben einen mechanischen Bereich bzw. Raum 120, in bzw. an dem verschiedene Komponenten mit unterschiedlichen Funktionen sowie Messkomponenten und Anzeigekomponenten, wie das zuvor genannte Nutzer-Interface 110 des Gargeräts 100 angeordnet sind. In der Bodenwand 106 ist eine Lufteinlassöffnung 111 angeordnet, benachbart zu der ein Hauptkühlgebläse 112 vorgesehen ist, das bei der in Fig. 1 dargestellten Ausführungsform des erfindungsgemäßen Gargeräts 100 das einzige Kühlgebläse ist. Ferner ist in der Bodenwand 106 eine Luftauslassöffnung 113 angeordnet. Im Betrieb saugt das Hauptkühlgebläse 112 Frischluft durch den Einlass 111 an, um einen Luftstrom zu erzeugen, der in Richtung des Pfeiles 114 strömt. Eine Trennwand 115 ist vorgesehen, um einen Kanal 116 im mechanischen Bereich bzw. Raum 120 zu bilden, die den Luftstrom 114 aufwärts in Richtung zur Deckenwand 105 des Gargeräts 100 leitet. Die Trennwand 115 leitet daher den Luftstrom 114 durch nahezu den gesamten mechanischen Bereich 120, sodass der Luftstrom 114 nicht direkt vom Einlass 111 zum Auslass 113 strömt und aus diesem austritt, wie dies durch den Fall 117 symbolisiert ist.

Im mechanischen Bereich 120 ist ferner eine Heizeinrichtung angeordnet, die im dargestellten Beispielsfalle ein Gasbrenner 121 mit einem Schlauch 122 ist, dessen Ende sich durch die Trennwand 115 in den Kanal 116 erstreckt, und dabei nahe dem Einlass 111 und dem Hauptkühlgebläse 112 angeordnet ist, wie sich dies aus Fig. 1 erschließt. Im Betrieb saugt der Gasbrenner 121 über seinen Schlauch 122 Luft an, erwärmt die Luft und leitet die erwärmte bzw. erhitzte Luft über Prallplatten bzw. Leitbleche 123. Die Bleche 123 bilden einen Strömungsweg für die erhitzte Luft vom Gasbrenner 121, um Wasser im Wasserspeicher 124 zu erhitzen, um Dampf für den Garraum während der Abarbeitung von Kochprogrammen zu liefern, die Dampf für alle oder zumindest einen Teil von Kochzyklen benötigen. Nach dem Durchlauf durch den von den Platten 123 gebildeten Strömungsweg tritt die vom Gasbrenner 121 erhitzte Luft durch einen Auslass 125 in Richtung des Pfeiles 126 aus dem Gargerät 100 aus. Daher erzeugt der Gasbrenner 121 im Betrieb einen gewissen Luftstrom durch den Einlass 111, den Kanal 116 und in den mechanischen Bereich 120. Der mechanische Bereich 120 weist ferner einen Garraumgasbrenner 130 auf, der einen Schlauch 131 umfasst, dessen eines Ende durch die Trennwand 115 in den Kanal 116 ragt. Dies ist jedoch nur eine mögliche Ausführungsform des Gargerätes 100. Denn das Ende des Schlauches 122 könnte auch aufwärts gerichtet zum oberen Rand der Trennwand 115 weisen. Alternativ könnte das Ende des Schlauches 120 nahe einer kritischen und empfindlichen Komponente angeordnet werden, die dann durch den angesaugten Luftstrahl, der in das Gargerät 100 eingeleitet wird, gekühlt wird, wenn der Gasbrenner 121 eingeschaltet ist. Im Betrieb kann ähnlich zum Gasbrenner 121 der Garraumgasbrenner 130 Luft über seinen Schlauch 131 in einer Stelle im Kanal 116, die zum Einlass 111 beabstandet ist, ansaugen. Daher kann im Betrieb auch der Garraumgasbrenner 130 einen gewissen Anteil einer Luftströmung durch den Kanal 116 und in den mechanischen Bereich 120 erzeugen.

Im mechanischen Bereich 120 ist ferner ein Motor 135 angeordnet, der sowohl im Uhrzeigersinn und im Gegenuhrzeigersinn betrieben werden kann, wie dies durch den Doppelpfeil 136 symbolisiert ist. Ferner kann der Motor 135 einen Stillstand-Modus für einen gewissen Zeitabschnitt einnehmen, der von dem ausgewählten Kochprogramm bzw. Rezept abhängt. Der Motor 135 dreht ein in Fig. 1 nicht dargestelltes Gebläserad, das im Garraum angeordnet ist und das Heißluft, die vom Gasbrenner 130 erzeugt wird, durch den Garraum leitet, um ein Garprodukt zu kochen. Der Motor 135 ist mit einer Mehrzahl von Motorkühlschaufeln 137 versehen, die für den Motor 135 einen gewissen Kühleffekt erzeugen. Dadurch, dass sich der Motor im Uhrzeigersinn oder entgegen dem Uhrzeigersinn drehen kann, erzeugt der Motor im mechanischen Bereich 120 in seiner Nähe einen Luftstrom, der entweder im Uhrzeigersinn oder entgegen dem Uhrzeigersinn strömt, wie dies durch den Doppelpfeil 138 symbolisiert ist, wobei diese Luftbewegung von der Drehrichtung des Motors 135 abhängt. Wenn sich der Motor 135 entgegen dem Uhrzeigersinn dreht, wird ein Luftstrom in einer Richtung erzeugt, der den Luftstrom, der in dem mechanischen Bereich 120 vom Kanal 116 aus eingeleitet wird, behindert. Wenn der Motor 135 nicht dreht und somit keine Luftbewegung oder Zirkulation der erwärmten Luft im Komponentenbereich 120, werden Bereiche mit unerwünscht hohen Temperaturen erhalten. Im mechanischen Bereich 120 ist ferner ein Kanal bzw. Kamin 140 vorgesehen, der mit dem Garraum in Fluidverbindung steht. Der Kamin 140 weist ein Ventil 141 auf, das geöffnet und geschlossen werden kann, um es erwärmter Luft zu ermöglichen, vom Garraum aus in die Umgebung abzuströmen oder es kühler Luft zu ermöglichen, in den Garraum eingesogen zu werden.

Wie Fig. 1 verdeutlicht, weist das Gargerät 100 ferner einen zusätzlichen Raum bzw. Bereich 150 für elektrische Komponenten auf, der vom unteren Teil der Trennwand 115 und einer Bodenwand 151 des Garraums sowie der Bodenwand 106 des Gargerätes 100 begrenzt wird. Hierbei steht der Raum 150 mit der Eintrittsöffnung 111 in Fluidverbindung, beispielsweise durch das Vorsehen einer in Fig. 1 nicht dargestellten Öffnung im unteren Bereich der Trennwand 115.

Für den Fall, dass die im Raum 150 angeordneten elektrischen Komponenten gekühlt werden müssen, ist das Gargerät 100 gemäß der Ausführungsform der Fig. 1 mit einer um einen Drehpunkt 151 schwenkbaren Klappe 150 versehen, die, wie in Fig. 1 gezeigt, in den vom Hauptkühlgebläse 112 erzeugten Luftstrom 114 schwenken kann und dabei einen Teilluftstrom 152 aus dem Hauptluftstrom 114 abzweigen und in den Raum 150 einleiten kann, wie dies durch den gestrichelten Pfeil 152 symbolisiert ist. Hierbei kann die Klappe 150 gemäß dem Doppelpfeil P um den Drehpunkt 151 geschwenkt werden, sodass die Öffnung in der Wand 115 mittels der Klappe 150 geschlossen werden kann, falls keine Kühlung der elektrischen Komponenten im Raum 150 nötig ist.

Dadurch wird eine effiziente Kühlung der elektrischen Komponenten im Raum 150 möglich gemacht, wobei die Bewegung der Klappe 150 beispielsweise motorisch erfolgen kann und abhängig davon ist, ob die im Raum 150 vorgesehene elektrische Komponenten eine Kühlung benötigen, beispielsweise weil sie sich in Betrieb befinden. Als Regelgröße hierfür kann ein Temperaturwert herangezogen werden, der beispielsweise im Kanal 116 mittels eines Temperaturfühlers 153 ermittelt werden kann.

Alternativ ist es auch möglich, separate Temperaturfühler an anderen Positionen innerhalb des Gargerätes 100 vorzusehen, wie insbesondere im Raum 150 selber, in dem die elektrischen Komponenten angeordnet werden.

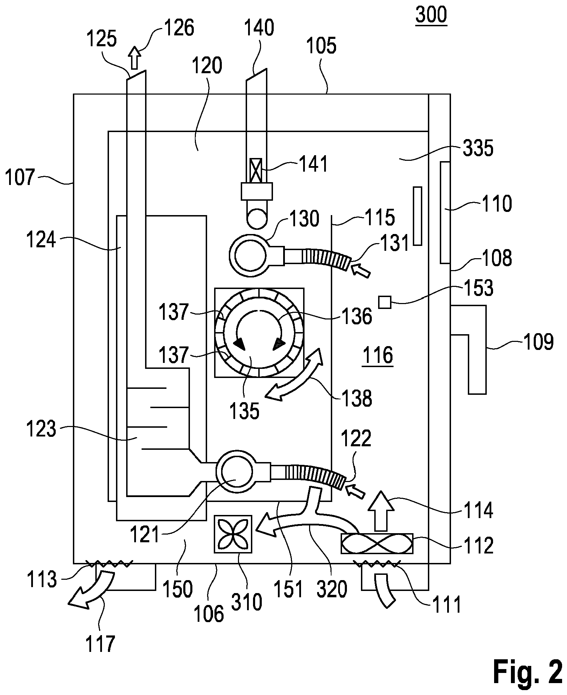

In Fig. 2 ist eine erste Ausführungsform eines erfindungsgemäßen Gargeräts 300 dargestellt, das ebenfalls vorzugsweise als gewerbliches Gargerät ausgebildet sein kann.

Die Komponenten, die mit der Ausführungsform gemäß Fig. 1 übereinstimmen, sind mit denselben Bezugsziffern versehen, sodass diesbezüglich auf die voranstehende Beschreibung der Fig. 1 Bezug genommen werden kann.

Das Gargerät 300 weist gegenüber der Ausführungsform der Fig. 1 ein Hilfskühlgebläse 310 auf, das eine geringere Gebläseleistung als das Hauptkühlgebläse 112 haben kann, im Bedarfsfall jedoch die gleiche oder sogar eine höhere Gebläseleistung aufweisen kann.

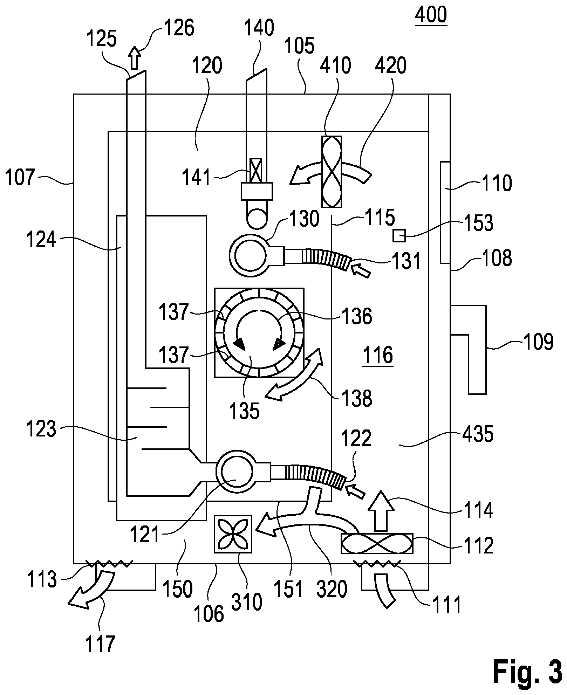

Das Hilfskühlgebläse 310 ist so angeordnet und dimensioniert, dass es einen Luftstrom 320 vom Einlass 111, und, falls nötig, vom mechanischen Bereich 120, in den Raum 150 einleiten kann, falls es sich in Betrieb befindet. Wie sich aus Fig. 3 ergibt, wird der Luftstrom 320 durch den Einlass 111 auf der gegenüberliegenden Seite der Trennwand 115 vom Hilfskühlgebläse 310 angesaugt, während, wie bei Fig. 1, das Hauptkühlgebläse 112 einen Luftstrom 114 in den Kanal 116 einleitet. Das Hilfskühlgebläse 310 ist somit dazu in der Lage, den Luftstrom durch den Bereich bzw. Raum 150 zu verbessern, wenn das Hauptkühlgebläse 112 im Betrieb den Luftstrom 114 erzeugt. Das Hilfskühlgebläse 310 ermöglicht eine Reduktion des Energieverbrauchs, der vom Hauptkühlgebläse 112 verursacht wird, durch folgende Umstände: (1) Das Hilfskühlgebläse 310 kann kleiner dimensioniert und ausgelegt werden als das Hauptkühlgebläse 112; (2) das Hauptkühlgebläse 112 kann ausgeschaltet bleiben, wenn das Hilfskühlgebläse 310 eingeschaltet ist; (3) die Betriebsdrehzahl des Hauptkühlgebläses 112 kann moduliert (insbesondere reduziert) werden, und zwar in Abhängigkeit vom Betrieb des Hilfskühlgebläses 310; und (4) das Hilfskühlgebläse 310 wird nur betrieben, wenn die Komponenten im Raum 150 betätigt werden und daher eine aktive Kühlung benötigen. Als weiterer Vorteil ist hervorzuheben, dass durch die Reduktion des Betriebs des Hauptkühlgebläses 112 verhindert werden kann, dass das Hauptkühlgebläse 112 den Garraum des Gargerätes unerwünschterweise kühlt.

In Fig. 3 ist eine zweite Ausführungsform eines erfindungsgemäßen Gargeräts 400 dargestellt, das im Wesentlichen der Ausführungsform gemäß Fig. 2 entspricht. Dementsprechend sind alle mit der Ausführungsform gemäß Fig. 2 übereinstimmende Komponenten mit denselben Bezugsziffern versehen, sodass diesbezüglich auf die voranstehende Beschreibung der Fig. 2 bzw. des dort dargestellten Gargeräts 300 Bezug genommen werden kann.

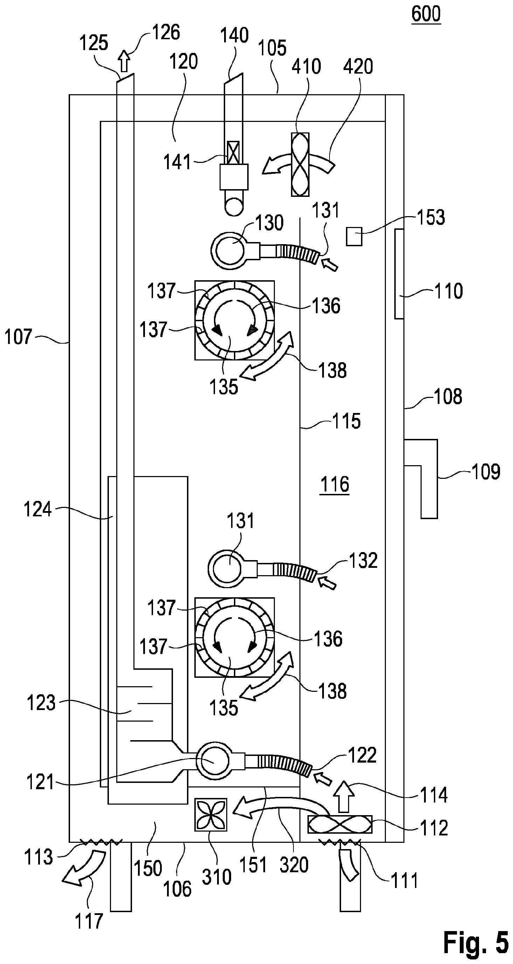

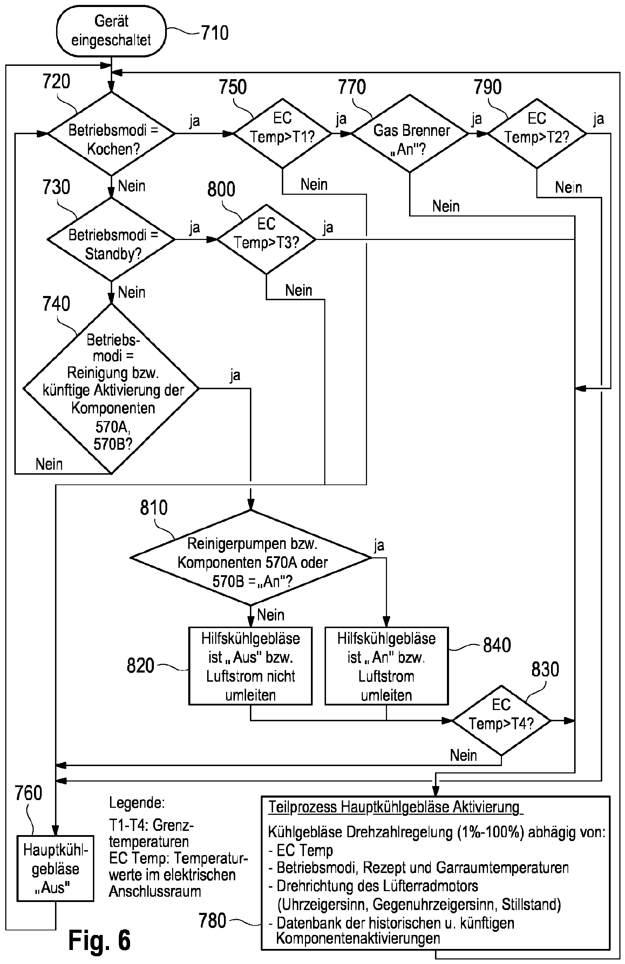

Das Gargerät 400 weist als optionales Merkmal ein zusätzliches Gebläse 410 auf, das nahe dem oberen Ende der Trennwand 115 angeordnet ist. Das Gebläse 410 kann jedoch praktisch an jeder Position, vorzugsweise im Kanal 116, in Bezug auf die Trennwand 115 oder in dem mechanischen Bereich 120 angeordnet sein. Vorzugsweise ist das Gebläse 410 jedoch oberhalb der Trennwand 115 in einen Zwischenbereich zwischen dem Kanal 116 und dem mechanischen Bereich 120 angeordnet. Das zusätzliche Gebläse 410 ist derart ausgelegt und angeordnet, dass es einen Luftstrom 420 vom Einlass 111 her ansaugen kann, und zwar unabhängig davon, ob das Hauptkühlgebläse 120 betätigt wird oder nicht. Zur gleichen Zeit kann das Gebläse 410 den Luftstrom durch den mechanischen Bereich bzw. den mechanischen Raum 120 verbessern, wenn das Hauptkühlgebläse 112 betätigt wird und den Luftstrom 114 erzeugt. Zusätzlich ermöglicht das Gebläse 410, dass das Hauptkühlgebläse 112 mit einer niedrigeren Drehzahl betrieben werden kann, was nachfolgend anhand der Fig. 6 im Einzelnen erläutert werden wird. Schließlich ist hervorzuheben, dass, wie zuvor bereits ausgeführt, das Gebläse 410 ein optionales Merkmal des Gargeräts 400 darstellt, dessen Verwendung insbesondere bei hoch bauenden, auf einen Boden aufstehenden Gargeräten, wie dies in Fig. 5, dortiges Gargerät 600, dargestellt ist.

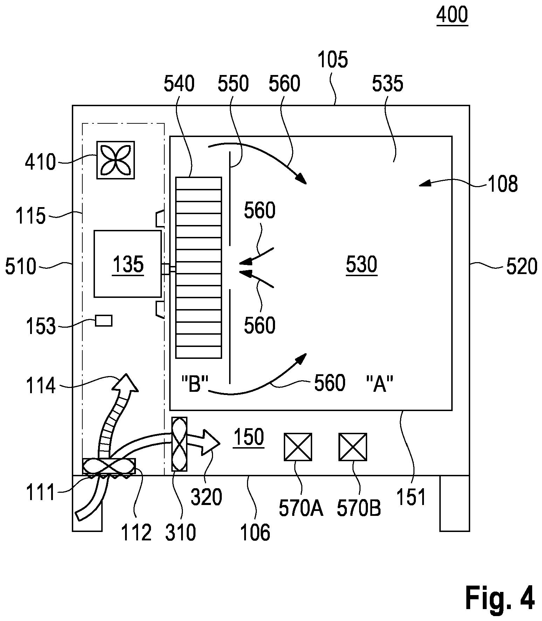

Fig. 4 zeigt eine Frontansicht des Gargerätes 400 gemäß Fig. 3. Das Gargerät 400 weist, gemäß der in Fig. 4 gewählten Darstellung, eine linke Wand 510 und eine rechte Wand 520 (gesehen von vorne her) auf. Das Gargerät 400 ist ferner mit einer Tür 530 versehen, die vorzugsweise mit einer Glasscheibe versehen ist, sodass Garprodukte im Garraum 535 von außen sichtbar sind. Innerhalb des Garraums 535 ist eine Platte oder Wand 550 vorgesehen, die den Garraum 535 in zwei Bereiche "A" und "B" teilt. Ein Gebläse 540 ist im Bereich "B" neben der Wand 550 angeordnet. Das Gebläse 540 bewegt erwärmte Luft durch den Garraum 535 und, wie zuvor erwähnt, wird vom Motor 135 entweder im Uhrzeigersinn oder entgegen dem Uhrzeigersinn gedreht oder verbleibt im Stillstand, sodass der Motor 135 das Gebläse 540 dementsprechend ebenfalls im Uhrzeigersinn oder entgegen dem Uhrzeigersinn dreht. Die Wand 550 weist Freiräume in ihrem äußeren Umfangsbereich wie auch eine mittige Öffnung auf, um eine Luftzirkulation im Garraum 535 zu ermöglichen, deren Richtung in Fig. 4 durch die Pfeile 560 symbolisiert ist. Fig. 4 verdeutlicht, dass das Hauptkühlgebläse 112 unter Umständen ineffektiv ist, um eine ausreichende Kühlung des Raumes 150 zu ermöglichen. Daher ist es, wie bei der zuvor beschriebenen Ausführungsform, vorteilhafterweise vorgesehen, das Hilfskühlgebläse 310 derart im Raum 150 anzuordnen, dass es Frischluft bzw. Kühlluft durch den Eintritt 111 ansaugt und in den Raum 150 einleitet, was in Fig. 4 wiederum durch den Pfeil 320 symbolisiert ist. Dies ermöglicht eine effektive und effiziente Kühlung von elektrischen Komponenten, die in Fig. 4 durch die Blöcke 570 A und 570 B dargestellt sind. Bei den elektrischen Komponenten 570 A, 570 B im Raum 150 kann es sich beispielsweise um Reinigungspumpen handeln, die nahe und unterhalb des Garraums 535 angeordnet sind. Hierdurch wird ein heißer Bereich im Raum 150 gebildet. Da der vom Hauptkühlgebläse 112 erzeugte Luftstrom 114 den Raum 150 und die in ihm angeordneten elektrischen Komponenten 570 A und 570 B nicht ausreichend kühlen kann, ohne dass das Hauptkühlgebläse 112 mit extrem hoher Gebläseleistung betrieben wird, ist das Hilfskühlgebläse 310 vorgesehen. Wie zuvor bereits erwähnt, hätte eine übermäßig hohe Kühlleistung des Hauptkühlgebläses 112 zwei negative Effekte: Zum einen würde eine unnötig hohe elektrische Last für das Hauptkühlgebläse 112 erzeugt und zum anderen würde der Garraum 535 unerwünschterweise gekühlt.

In Fig. 5 ist eine dritte Ausführungsform eines Gargerätes dargestellt, das mit der Bezugsziffer 600 identifiziert ist. Alle mit den vorhergehenden Ausführungsformen übereinstimmenden Bauteile sind in denselben Bezugsziffern bezeichnet, sodass auf die vorangehenden Beschreibungen der Ausführungsformen gemäß den Fig. 1 bis 4 Bezug genommen werden kann.

Das in Fig. 5 dargestellte Gargerät 600 zeichnet sich durch das Vorsehen zweier Heizeinrichtungen aus, die im Beispielsfalle als Gasbrenner 130 ausgebildet sind. Ferner weist das Gargerät 602 Motoren 135 und diesen zugeordnete Komponenten auf. Aufgrund der Höhe des Gargerätes 600 und der Länge der Trennwand 115 und des Kanals 116 ist bei dieser Ausführungsform, wie zuvor bereits erwähnt, ein Zusatzgebläse 410 eine besonders bevorzugte Ausführungsform.

Nachfolgend wird anhand der Fig. 6 eine mögliche Ausführungsform des erfindungsgemäßen Verfahrens beschrieben, das in Fig. 6 als eine elektrische Komponente eine Reinigungspumpe vorsieht, die in Fig. 4 mit dem Block 570 A identifiziert ist und was rein beispielhaft ist. Denn auch weitere elektrische Komponenten können in einem Gargerät vorgesehen sein, was hauptsächlich von den vorgesehenen Betriebsarten des jeweiligen Gargeräts abhängt.

Das in Fig. 6 verdeutlichte erfindungsgemäße Verfahren nimmt in Schritt 710 das Gargerät, wie die Geräte 100, 300, 400 und 600, in Betrieb. Im Schritt 720 wird der Betriebsmodus "Kochmodus" abgefragt. Falls im Schritt 720 die Antwort auf die Frage "Nein" ist, geht das Programm bzw. Verfahren zum Schritt 730, der einen weiteren Entscheidungsblock darstellt, in dem nach der Betriebsart "Standby" gefragt wird. Es ist selbstverständlich, dass diese Betriebsart "Standby" beispielsweise solche Situationen umfasst, in denen das Gargerät noch nicht die entsprechende Betriebstemperatur erreicht hat, oder auch solche Situationen, in denen das Gargerät aufgeheizt wird, aber noch nicht aktiv ein Garprodukt kocht. Falls die Antwort in Schritt 730 "Nein" ist, geht das Verfahren zum Schritt 740, der einen weiteren Entscheidungsblock darstellt, in dem die Frage nach dem "Reinigungsmodus" gestellt ist. Falls die Antwort auf diese Frage "Nein" ist, kehrt das Verfahren zum Schritt 720 zurück. Es ist selbstverständlich, dass im Falle des Inbetriebnehmens des Gargeräts die Antwort auf eine der Fragen in den Schritten 720, 730 oder 740 "Ja" sein muss. Jedoch wurden die Alternativen "Nein" lediglich beschrieben, um zu verdeutlichen, dass für diesen Fall das Verfahren von einem Schritt zum nächsten Schritt wandert und für den Fall, dass alle Schritte 720, 730 und 740 mit der Antwort "Nein" beantwortet werden, das Verfahren zu Schritt 720 zurückkehrt.

Zum Zwecke der nachfolgenden Beschreibung des Verfahrens wird davon ausgegangen, dass keine bestimmte Temperatur für die Temperaturen "T1, T2, T3, T4" gewählt worden ist, da die Temperaturwerte von der Art des Gerätes und seiner Größe sowie dem Einsatzort vor allem abhängen. Zusätzlich können die Temperaturwerte vom Benutzer variiert werden oder auch werksseitig voreingestellt werden, wobei das Auswählen eines Kochrezeptes ein Einflussfaktor sein kann oder die Temperaturwerte auch von den jeweiligen installierten Komponenten, die im Raum 150 angeordnet sind, abhängen können. Rein Beispielshaft sei angegeben, dass die genannten Temperaturwerte beispielsweise T1 = 45 °C, T2 = 50 °C, T3 = 55 °C und T4 = 47 °C sein können.

Falls in Schritt 720 die Antwort "Ja" ist, schreitet das Verfahren zum Schritt 750 weiter. Im Schritt 750 ist wiederum ein Entscheidungsblock erreicht, in dem gefragt wird, ob die Temperatur EC im Raum 116, 120 oder 150 für die elektrischen Komponenten größer als die Grenztemperatur T1 ist. Falls die Antwort "Nein" ist, geht das Verfahren zum Schritt 760, in dem das Hauptkühlgebläse 112 auf "Aus" gesetzt wird oder in diesem Zustand verbleibt. Falls die Antwort auf die Frage in Schritt 750 "Ja" ist, geht das Verfahren zum Schritt 770. Im Schritt 770 wird ein weiterer Entscheidungsblock erreicht, in dem die Frage gestellt wird, ob die Heizeinrichtung, insbesondere der Gasbrenner 130 und/oder Gasbrenner 121, angeschaltet ist. Falls die Antwort "Nein" ist, geht das Verfahren zum Schritt 780. Gemäß Schritt 780 verbleibt das Hauptkühlgebläse 112 im eingeschalteten Zustand oder wird auf diesen Zustand geschaltet. An diesem Punkt kann die Drehzahl des Hauptkühlgebläses 112 wie folgt eingestellt werden: (1) In Abhängigkeit von der tatsächlichen Temperatur im elektrischen Raum 116, 120 oder 150 bzw. über DIP- oder Fuzzy Regeltechnik; (2) in Abhängigkeit vom Betriebsmodus und der eingestellten Betriebstemperatur des Kochprogrammes/Zyklus des Gargeräts; (3) in Abhängigkeit von der Motordrehzahl des Motors 135 (im Uhrzeigersinn, entgegen dem Uhrzeigersinn oder Stillstand). Dies ist der Punkt im Verfahren, an dem das Hilfskühlgebläse 310 und/oder das zusätzliche Gebläse 410 benutzt werden können. Beispielsweise, in Abhängigkeit von der tatsächlichen Temperatur im Raum 116, 120 oder 150, können entweder das Hilfskühlgebläse 310 oder das Hilfsgebläse 410 oder beide Gebläse 310 und 410 benutzt werden, um die Luftströmung im Raum 150 für elektrische Komponenten zu erhöhen. Als weiteres Beispiel kann die Situation genannt werden, in der der Motor 135 im Uhrzeigersinn dreht und das Zusatzgebläse 410 angeschaltet wird und die Drehzahl des Hauptkühlgebläses 112 abgesenkt werden kann (oder umgekehrt), die Luftströmung 138, die vom Motor 135 erzeugt wird, in derselben Drehrichtung liegt wie in der Luftströmung 114. Andererseits, falls der Motor 135 im Gegenuhrzeigersinn dreht, können entweder das Hilfsgebläse 410 und das Hauptkühlgebläse 120 oder beide Gebläse 410 und 112 benutzt werden, um eine höhere Drehzahl zu erreichen, um sicherzustellen, dass die Luftströmung 114 den Gegenstrom der Luftströmung 138, der vom Motor 135 erzeugt wird, zu überwinden kann.

Falls im Schritt 770 die Antwort "Ja" ist, geht das Verfahren zum Schritt 790. Im Schritt 790, der einen weiteren Entscheidungsblock darstellt und in dem die Frage gestellt wird, ob die Temperatur EC im elektrischen Raum 116, 120 oder 150 größer als T2 ist, geht im Falle der Antwort "Nein" das Verfahren zu Schritt 760 und das Hauptkühlgebläse 112 wird ausgeschaltet oder verbleibt in der Position "Aus". Andererseits, falls die Antwort auf die Frage nach der Temperatur im Raum 116, 120 oder 150 im Hinblick auf die Temperatur T2 "Ja" ist, schreitet das Verfahren zu Schritt 780. Der Vollständigkeit halber sei angemerkt, dass das Verfahren vorzugsweise einen Temperaturbereich, beispielsweise den Temperaturbereich zwischen T1 und T2, für den "An/Aus" Betriebszustand des Brenners 130 analysiert und bestimmt. Dies wird vor allem deshalb durchgeführt, da es sich hierbei hauptsächlich um ein Sicherheitsmerkmal handelt. Denn im Rahmen der Erfindung durchgeführte Untersuchungen haben ergeben, dass die Aktivierung des Brenners 130 das Hauptkühlgebläse 112 unterstützt oder sogar ersetzen kann. Die Temperatur im Raum 116, 120 oder 150 kann jedoch noch über der Temperatur T2 liegen und daher die Aktivierung des Hauptkühlgebläses 112 nötig sein, bzw. erforderlich werden. Dies liegt daran, dass der Gasbrenner 130 und/oder Gasbrenner 121 gestuft arbeitet. Zuerst wird der Gasbrenner 130 in einem minimalen Leistungsmodus gestartet, um eine saubere Zündung zu erreichen, wonach der Gasbrenner 130 in den Maximalmodus schaltet. Der Gasbrenner 130 im

Garraum saugt dementsprechend unterschiedliche Mengen an Luft an, je nachdem, ob er im Minimalmodus oder im Maximalmodus betrieben wird, und beeinflusst daher das Kühlmanagement entsprechend.

Im Schritt 730, der ebenfalls ein Entscheidungsblock ist, wird die Frage nach dem Standby-Modus gestellt. Falls die Antwort auf die Frage "Ja" ist, schreitet das Programm zum Schritt 800 fort, der ebenfalls ein Entscheidungspunkt ist und in dem die Frage gestellt ist, ob die Temperatur EC im Raum 116, 120 oder 150 größer als die Temperatur T3 ist. Falls die Antwort "Nein" ist, schreitet das Programm zum Schritt 760 vor. Falls die Antwort auf die Frage am Entscheidungspunkt in Schritt 800"Ja" ist, schreitet das Programm zum Schritt 780. In Schritt 740 ist ein Entscheidungsblock erreicht, in dem die Frage gestellt wird, ob sich das Gargerät im Reinigungsmodus befindet. Falls die Antwort auf diese Frage "Ja" ist, schreitet das Programm zum Schritt 810, der ebenfalls ein Entscheidungspunkt bzw. Entscheidungsblock ist und in dem die Frage gestellt wird, ob die Pumpe angeschaltet ist. Falls die Antwort auf diese Frage "Nein" ist, schreitet das Programm zum Schritt 820. In Schritt 820 wird das Hilfskühlgebläse 310 im Raum 150 ausgeschaltet oder verbleibt im Schaltzustand "Aus". Von 820 schreitet das Programm zum Schritt 830. In Schritt 830 ist wiederum ein Entscheidungspunkt bzw. Entscheidungsblock erreicht und es wird die Frage gestellt, ob die Temperatur EC im Raum 116, 120 oder 150 größer als die Grenztemperatur T4 ist. Falls die Antwort auf diese Frage "Nein" ist, geht das Programm zum Schritt 760. Wenn das Programm jedoch zu Schritt 830 geht, und die Antwort auf die Frage, ob die Temperatur EC größer als die Grenztemperatur T4 ist, "Ja" ist, schreitet das Programm zum Schritt 780. Falls die Antwort in Schritt 810 "Ja" ist, also die Reinigungspumpe angeschaltet ist, schaltet das Programm zu Schritt 840 und das Gebläse 310 wird angeschaltet oder verbleibt im Schaltzustand "An". Beim Fortschreiten von Schritt 840 zu Schritt 830 wird die Frage gestellt, ob die Temperatur EC im Raum 116, 120 oder 150 größer als die Temperatur T4 ist. Für den Fall, dass die Antwort auf diese Frage "Nein" ist, schreitet das Programm zum Schritt 760, während es für den Fall der Antwort "Ja" zum Schritt 780 fortschreitet, in dem das Hauptkühlgebläse eingeschaltet wird oder im Schaltzustand "Ein" verbleibt.

Neben der voranstehenden schriftlichen Offenbarung der Erfindung wird hiermit zur Ergänzung der Offenbarung explizit auf die Darstellung in den Fig. 1 bis 6 Bezug genommen.

## Patentansprüche

1. Verfahren zum Betreiben eines gewerblichen Gargerätes (100; 300; 400; 600) mit unterschiedlichen Betriebsmodi (720, 730, 740), welches aufweist:
- ein Gehäuse (105, 106, 107, 108),
- zumindest eine Heizeinrichtung (121, 130),
- ein Hauptkühlgebläse (112),
- zumindest ein Hilfskühlgebläse (310),
- zumindest eine zu kühlende, insbesondere elektrische, Komponente in einem vom Hauptkühlgebläse (112) unmittelbar beaufschlagten ersten Raum (116),
- zumindest eine weitere zu kühlende, vorzugsweise elektrische, Komponente (570 A, 570 B) in einem vom Hauptkühlgebläse (112) nicht unmittelbar beaufschlagten zweiten Raum (120, 150), und
- einen Temperaturfühler (153), der im Gehäuse (105, 106, 107, 108) angeordnet ist, wobei das Verfahren folgende Verfahrensschritte aufweist:
- Festsetzen und Einstellen von den Betriebsmodi (720, 730, 740) zugeordneten Grenztemperaturen (T1, T2 zu 720; T3 zu 730; T4 zu 740), bei deren Überschreitung eine Kühlung eingeleitet wird;
- Bestimmen des aktivierten Betriebsmodus (720, 730, 740),
- Bestimmen, ob eine vom aktivierten Betriebsmodus abhängende Temperatur (EC), vorzugsweise im ersten Raum (116), die dem aktivierten Betriebsmodus (720, 730, 740) zugeordnete Grenztemperatur (T1, T2; T3; T4) überschreitet, wobei die Bestimmung der vom aktivierten Betriebsmodus abhängenden Temperatur (EC) mittels des im Gehäuse (105, 106, 107, 108) angeordneten Temperaturfühlers (153) erfolgt,
- Aktivieren des Hauptkühlgebläses (112), falls bestimmt wird, dass die jeweilige Grenztemperatur (T1, T2; T3 bzw. T4) überschritten ist,
- wobei zusätzlich das Hilfskühlgebläse (310) aktiviert wird, falls bestimmt wird, dass die Komponente im zweiten Raum (150) schon aktiviert ist oder ihre Aktivierung kurzzeitig bevorsteht,
- wohingegen nur das Hilfskühlgebläse (310) aktiviert wird, falls bestimmt wird, dass die Komponente im zweiten Raum (150) schon aktiviert ist oder ihre Aktivierung kurzzeitig bevorsteht, aber im zugeordneten Betriebsmodus (740) die diesen Betriebsmodus (740) zugeordnete Grenztemperatur (T4) als nicht überschritten bestimmt wird

2. Verfahren nach Anspruch 1, **gekennzeichnet durch** folgende Verfahrensschritte, falls als Betriebsmodus ein Kochmodus (720) bestimmt wird und falls als Heizeinrichtung ein Brenner (121, 130) verwendet wird:
- Bestimmen, ob eine erste Grenztemperatur (T1) überschritten ist,
- Ausschalten bzw. Nicht-Aktivieren des einzigen Kühlgebläses (112) oder des Hauptkühlgebläses (112), falls die erste Grenztemperatur (T1) nicht überschritten ist;
- Bestimmen, ob der Brenner (121, 130) aktiviert ist, falls die erste Grenztemperatur (T1) überschritten ist,
- Aktivieren des einzigen Kühlgebläses (112) oder des Hauptkühlgebläses (112), falls der Brenner (121, 130) nicht aktiviert ist;
- Bestimmen, ob eine zweite Grenztemperatur (T2) überschritten ist;
- Ausschalten bzw. Nicht-Aktivieren des einzigen Kühlgebläses (112) oder des Hauptkühlgebläses (112), falls die zweite Grenztemperatur (T2) nicht überschritten ist; und
- Aktivieren des Hauptkühlgebläses (112), falls die zweite Grenztemperatur (T2) überschritten ist.

3. Verfahren nach einem der Ansprüche 1 oder 2, **dadurch gekennzeichnet, dass** als Betriebsmodus ein Stand-By-Modus (730) bestimmt wird.

4. Verfahren nach einem der Ansprüche 1 bis 3, **dadurch gekennzeichnet, dass** ein Zusatzlüfter (410) zur Versorgung eines mechanische Komponenten aufweisenden Mechanikraums (120) des Gerätes mit Kühlluft zuschaltbar ist.

5. Verfahren nach einem der Ansprüche 1 bis 4, **dadurch gekennzeichnet, dass** als Parameter für die Drehzahlregelung des Hauptkühlgebläses (112) die Temperatur bzw. die Temperaturen (EC) im zweiten Raum (150) und/oder der Betätigungsmodus und die eingestellte Temperatur des Rezeptprofils und/oder die Drehrichtung eines Motors (135) für ein Lüfterrad des Gargerätes herangezogen werden.

6. Verfahren nach einem der Ansprüche 1 bis 5, **dadurch gekennzeichnet, dass** das Maß der Aktivierung des Hauptkühlgebläses (112) und/oder des Hilfskühlgebläses (310) an die Anzahl der zugeschalteten aktiven zu kühlenden Komponenten angepasst wird.

7. Gewerbliches Gargerät (300; 400; 600) zur Durchführung des Verfahrens gemäß Anspruch 1
- mit einem Gehäuse (105, 106, 107, 108), in dem ein Garraum (335, 435, 535) angeordnet ist,
- mit einem Temperaturfühler (153), der zur Bestimmung der vom aktivierten Betriebsmodus abhängenden Temperatur (EC) im Gehäuse (105, 106, 107, 108) angeordnet ist,
- mit einem Hauptkühlgebläse (112), das, einer Lufteintrittsöffnung (111) benachbart, im Gehäuse (105, 106, 107, 108) angeordnet ist,
- mit einem ersten vom Hauptkühlgebläse (112) unmittelbar beaufschlagten Raum (116), und
- mit einem zweiten Raum (150), der vom Hauptkühlgebläse (112) nicht unmittelbar beaufschlagt ist, und vorzugsweise unterhalb des Garraums (335, 435, 535) im Gehäuse angeordnet ist, und, vorzugsweise elektrische, zu kühlende Komponenten (570 A, 570 B) aufnimmt, **dadurch gekennzeichnet,**
- **dass** im zweiten Raum (150) ein zuschaltbares Hilfskühlgebläse (310) angeordnet ist, das mit der Lufteintrittsöffnung (111) des Hauptkühlgebläses (112) oder einer weiteren, dem Hilfskühlgebläse (310) zugeordneten Lufteintrittsöffnung in Strömungsverbindung steht.

8. Gewerbliches Gargerät nach Anspruch 7, **dadurch gekennzeichnet, dass** die Gebläseleistung des Hilfskühlgebläses (310) niedriger ist als die Gebläseleistung des Hauptkühlgebläses (112).

9. Gewerbliches Gargerät nach Anspruch 7 oder 8, **gekennzeichnet durch** ein Zusatzgebläse (410) zur Versorgung eines mechanische Komponenten aufweisenden Mechanikraums (120) durch Kühlluft.

## Claims

1. Method for operating a commercial cooking device (100; 300; 400; 600) having different operating modes (720, 730, 740), comprising:
- a housing (105, 106, 107, 108),
- at least one heating means (121, 130),
- a main cooling fan (112),
- at least one auxiliary cooling fan (310),
- at least one in particular electrical component to be cooled in a first space (116) directly impinged by the main cooling fan (112),
- at least one further preferably electrical component (570A, 570B) to be cooled in a second space (120, 150) not directly impinged by the main cooling fan (112), and
- a temperature sensor (153) which is arranged in the housing (105, 106, 107, 108),
wherein the method comprises the following steps:
- establishing and setting of limit temperatures (T1, T2 to 720; T3 to 730; T4 to 740) assigned to the operating modes (720, 730, 740), wherein a cooling process is initiated in exceess of this;
- determining the activated operating mode (720, 730, 740),
- determining whether a temperature (EC) dependent on the activated operating mode, preferably in the first room (116), exceeds the limit temperature (T1, T2; T3; T4) assigned to the activated operating mode (720, 730, 740), wherein the determination of the the temperature (EC) depending on the activated operating mode takes place by means of the temperature sensor (153) arranged in the housing (105, 106, 107, 108),
- activating the main cooling fan (112) if it is determined that the respective limit temperature (T1, T2; T3 or T4) has been exceeded,
- wherein the auxiliary cooling fan (310) is additionally activated if it is determined that the component in the second room (150) is already activated or is about to be activated for a short time,
- whereas only the auxiliary cooling fan (310) is activated if it is determined that the component in the second room (150) is already activated or is about to be activated for a short time, but the limit temperature (T4) assigned to this operating mode (740) in the assigned operating mode (740) is determined not to be exceeded.

2. Method according to claim 1, **characterized by** the following method steps, if a cooking mode (720) is determined as the operating mode and if a burner (121, 130) is used as the heating device:
- determining whether a first limit temperature (T1) is exceeded,
- switching off or non-activation of the single cooling fan (112) or the main cooling fan (112) if the first limit temperature (T1) is not exceeded;
- determining whether the burner (121, 130) is activated if the first limit temperature (T1) is exceeded,
- activating the single cooling fan (112) or the main cooling fan (112) if the burner (121, 130) is not activated;
- determining whether a second limit temperature (T2) is exceeded;
- switching off or non-activation of the single cooling fan (112) or the main cooling fan (112) if the second limit temperature (T2) is not exceeded; and
- activating of the main cooling fan (112) if the second limit temperature (T2) is exceeded.

3. Method according to any of claims 1 or 2, **characterized in that** a stand-by mode (730) is determined as the operating mode.

4. Method according to any of claims 1 to 3, **characterized in that** an additional fan (410) can be switched on for supplying cooling air to a mechanical room (120) of the device having mechanical components.

5. Method according to any of claims 1 to 4, **characterized in that**, as parameters for the speed control of the main cooling fan (112), the temperature or the temperatures (EC) in the second space (150) and / or the operating mode and the set temperature of the recipe profile and / or the direction of rotation of a motor (135) can be used for a fan wheel of the cooking device.

6. Method according to any of claims 1 to 5, **characterized in that** the amount of activation of the main cooling fan (112) and / or the auxiliary cooling fan (310) is adapted to the number of connected active components to be cooled.

7. Commercial cooking device (300; 400; 600) for performing the method according to claim 1, comprising
- a housing (105, 106, 107, 108) in which a cooking space (335, 435, 535) is arranged,
- a temperature sensor (153) which is arranged in the housing (105, 106, 107, 108) to determine the temperature (EC) that depends on the activated operating mode,
- a main cooling fan (112) which, adjacent to an air inlet opening (111), is arranged in the housing (105, 106, 107, 108),
- a first space (116) directly impinged by the main cooling fan (112), and
- a second space (150), which is not directly impinged by the main cooling fan (112), and is preferably arranged below the cooking space (335, 435, 535) in the housing, and is receiving, preferably electrical, components to be cooled (570A, 570B), **characterized in that**
- a switchable auxiliary cooling fan (310) is arranged in the second space (150) that is in flow communication with the air inlet opening (111) of the main cooling fan (112) or with a further air inlet opening assigned to the auxiliary cooling fan (310).

8. Commercial cooking device according to claim 7, **characterized in that** the fan output of the auxiliary cooling fan (310) is lower than the fan output of the main cooling fan (112).

9. Commercial cooking device according to claim 7 or 8, **characterized by** an additional blower (410) for supplying cooling air to a mechanical space (120) having mechanical components.

## Revendications

1. Procédé pour faire fonctionner un appareil de cuisson (100 ; 300 ; 400 ; 600) industriel avec différents modes de fonctionnement (720, 730, 740), lequel présente :
- une enceinte (105, 106, 107, 108),
- au moins un dispositif de chauffage (121, 130),
- une soufflante de refroidissement principale (112),
- au moins une soufflante de refroidissement auxiliaire (310),
- au moins un composant, en particulier électrique, à refroidir dans un premier compartiment (116) directement soumis à l'action de la soufflante de refroidissement principale (112),
- au moins un autre composant (570 A, 570 B), de préférence électrique, à refroidir dans un deuxième compartiment (120, 150) non soumis directement à l'action de la soufflante de refroidissement principale (112), et
- une sonde de température (153), qui est disposée dans l'enceinte (105, 106, 107, 108),
dans lequel le procédé présente des étapes de procédé suivantes :
- la détermination et le réglage de températures limites (T1, T2 pour 720 ; T3 pour 730 ; T4 pour 740) associées aux modes de fonctionnement (720, 730, 740), lors du dépassement desquelles un refroidissement est initié ;
- la détermination du mode de fonctionnement (720, 730, 740) activé,
- la détermination indiquant si une température (EC) dépendant du mode de fonctionnement activé dépasse, de préférence dans le premier compartiment (116), la température limite (T1, T2; T3; T4) associée au mode de fonctionnement (720, 730, 740) activé, dans lequel la détermination de la température (EC) dépendant du mode de fonctionnement activé est effectuée au moyen de la sonde de température (153) disposée dans l'enceinte (105, 106, 107, 108),
- l'activation de la soufflante de refroidissement principale (112) s'il est déterminé que la température limite (T1, T2 ; T3 ou T4) respective est dépassée,
- dans lequel en supplément la soufflante de refroidissement auxiliaire (310) est activée s'il est déterminé que le composant est déjà activé dans le deuxième compartiment (150) ou son activation est imminente brièvement,
- alors que seule la soufflante de refroidissement auxiliaire (310) est activée s'il est déterminé que le composant est déjà activé dans le deuxième compartiment (150) ou son activation est imminente brièvement, la température limite (T4) associée audit mode de fonctionnement (740) est déterminée comme non dépassée dans le mode de fonctionnement (740) associé.

2. Procédé selon la revendication 1, **caractérisé par** des étapes de procédé suivantes si un mode de cuisson (720) est déterminé en tant que mode de fonctionnement et si un brûleur (121, 130) est utilisé en tant que dispositif de chauffage :
- la détermination indiquant si une première température limite (T1) est dépassée,
- la désactivation ou la non activation de l'unique soufflante de refroidissement (112) ou de la soufflante de refroidissement principale (112) si la première température limite (T1) n'est pas dépassée ;
- la détermination indiquant si le brûleur (121, 130) est activé si la première température limite (T1) est dépassée,
- l'activation de l'unique soufflante de refroidissement (112) ou de la soufflante de refroidissement principale (112) si le brûleur (121, 130) n'est pas activé ;
- la détermination indiquant si une deuxième température limite (T2) est dépassée ;
- la désactivation ou la non activation de l'unique soufflante de refroidissement (112) ou de la soufflante de refroidissement principale (112) si la deuxième température limite (T2) n'est pas dépassée ; et
- l'activation de la soufflante de refroidissement principale (112) si la deuxième température limite (T2) est dépassée.

3. Procédé selon l'une quelconque des revendications 1 ou 2, **caractérisé en ce qu'**un mode de veille (730) est déterminé en tant que mode de fonctionnement.

4. Procédé selon l'une quelconque des revendications 1 à 3, **caractérisé en ce qu'**un ventilateur supplémentaire (410) peut être mis en service pour alimenter un compartiment mécanique (120), présentant des composants mécaniques, de l'appareil en air frais.

5. Procédé selon l'une quelconque des revendications 1 à 4, **caractérisé en ce que** la température ou les températures (EC) dans le deuxième compartiment (150) et/ou le mode d'actionnement et la température réglée du profil de recette et/ou le sens de rotation d'un moteur (135) sont pris en compte pour une roue de ventilateur de l'appareil de cuisson en tant que paramètres pour la régulation de la vitesse de rotation de la soufflante de refroidissement principale (112).

6. Procédé selon l'une quelconque des revendications 1 à 5, **caractérisé en ce que** l'étendue de l'activation de la soufflante de refroidissement principale (112) et/ou de la soufflante de refroidissement auxiliaire (310) est adaptée au nombre des composants à refroidir actifs mis en service.

7. Appareil de cuisson (300 ; 400 ; 600) industriel pour mettre en œuvre le procédé selon la revendication 1
- avec une enceinte (105, 106, 107, 108), dans laquelle un compartiment de cuisson (335, 435, 535) est disposé,
- avec une sonde de température (153), qui est disposée dans l'enceinte (105, 106, 107, 108) pour déterminer la température (EC) dépendant du mode de fonctionnement activé,
- avec une soufflante de refroidissement principale (112), qui est disposée dans l'enceinte (105, 106, 107, 108), de manière adjacente à une ouverture d'entrée d'air (111),
- avec un premier compartiment (116) soumis directement à l'action de la soufflante de refroidissement principale (112), et
- avec un deuxième compartiment (150), qui n'est pas soumis directement à l'action de la soufflante de refroidissement principale (112) et est disposé de préférence sous le compartiment de cuisson (335, 435, 535) dans l'enceinte et reçoit des composants (570 A, 570 B) à refroidir, de préférence électriques, **caractérisé en ce**
- **qu'**est disposée dans le deuxième compartiment (150) une soufflante de refroidissement auxiliaire (310) pouvant être mise en service, qui est en communication fluidique avec l'ouverture d'entrée d'air (111) de la soufflante de refroidissement principale (112) ou avec une autre ouverture d'entrée d'air associée à la soufflante de refroidissement auxiliaire (310).

8. Appareil de cuisson industriel selon la revendication 7, **caractérisé en ce que** la puissance de soufflante de la soufflante de refroidissement auxiliaire (310) est inférieure à la puissance de soufflante de la soufflante de refroidissement principale (112).

9. Appareil de cuisson industriel selon la revendication 7 ou 8, **caractérisé par** une soufflante supplémentaire (410) pour alimenter un compartiment mécanique (120) présentant des composants mécaniques en air frais.
